# EUROPEAN PATENT APPLICATION

(11) **EP 4 625 185 A1**
(43) Date of publication of application: **01.10.2025**
(21) Application number: 25166829.9
(22) Date of filing: 27.03.2025
(51) Int. Cl.: G06F 12/1009, G06F 12/1027, G06F 12/14

(54) **MEMORY ACCESS CONTROL WITH A FORBIDDEN MAPPING SCHEME**

(30) Priority: 28.03.2024 US 202463570992 P
(71) Applicant: GOOGLE LLC, Mountain View CA 94043 (US)
(72) Inventor: Pandya, Chintan Bipinchandra, 560 016 Bangalore (IN); Devshatwar, Nikhil Nandkishor, 560 016 Bangalore (IN)
(74) Representative: Marks & Clerk GST

(57) **Abstract**

Methods, systems, and apparatus, including computer programs encoded on computer storage media, for performing memory access control using a forbidden mapping scheme. In to one aspect, a system comprises a memory management unit configured (i) to perform a multi-stage address translation, wherein a first stage of the address translation performs address translation from virtual addresses to intermediate physical addresses, and wherein a second stage of the address translation performs address translation from intermediate physical addresses to physical addresses, (ii) to maintain a forbidden mapping between intermediate physical addresses and physical addresses, and (iii) operate in a forbidden mapping mode to perform multi-stage address translation by performing operations comprising: translating a virtual address into an intermediate physical address, reading the forbidden mapping using the intermediate physical address, and returning a physical address for the intermediate physical address if the intermediate physical address misses in the forbidden mapping.

## Description

### BACKGROUND

This specification relates to memory access control, and more particularly to performing memory access control using a memory management unit.

A computer can run an application by allocating and assigning addresses for the application to use from an address space managed by the computer. The computer can run multiple applications at the same time. To ensure security and proper execution of an application, the computer can isolate some or all of the address space used by the application. In particular, the computer may allow only a certain set of applications to access a given region of the address space (e.g., reserved by the set of applications, protected by the set of applications, etc.), and the computer can prevent all other applications from accessing (e.g., reading, writing, etc.) the given region of the address space. Memory access control is the process of the computer receiving an attempted memory access from an application to a given region of the computer's address space, determining whether the application is allowed to access the given region of the address space, and performing the attempted memory access only if the application is allowed to access the given region of the address space.

The computer can use a virtual address space as part of running the applications. To use the virtual address space, an application can request access to a given virtual address and the computer can, as appropriate, perform address translation to obtain the requested data in a physical address of the computer's address space that corresponds to the given virtual address. The computer can use a memory management unit to translate virtual addresses into physical addresses within the computer's address space.

### SUMMARY

In general, this specification describes a computing system that can perform memory access control using a forbidden mapping scheme when translating virtual addresses into corresponding physical addresses. In particular, the translation and associated memory access request is only permitted if the virtual address does not exist in a forbidden mapping data structure. This arrangement confers several technological benefits over conventional techniques that maintain mappings of permitted access regions.

According to one aspect, there is provided a system that includes a memory management unit configured (i) to perform a multi-stage address translation, wherein a first stage of the address translation performs address translation from virtual addresses to intermediate physical addresses, and wherein a second stage of the address translation performs address translation from intermediate physical addresses to physical addresses, (ii) to maintain a forbidden mapping between intermediate physical addresses and physical addresses, and (iii) operate in a forbidden mapping mode to perform multi-stage address translation by performing operations including: translating a virtual address into an intermediate physical address, reading the forbidden mapping using the intermediate physical address, and returning a physical address for the intermediate physical address if the intermediate physical address misses in the forbidden mapping.

Particular embodiments of the subject matter described in this specification can be implemented so as to realize one or more of the following advantages.

Conventional methods for performing access control of virtual addresses rely on "allow-listed" mappings from the virtual addresses to physical addresses. By using an allow-listed scheme, conventional methods require storing (e.g., in page-tables) mappings for every virtual address for which memory access is permitted. In cases where the number of protected addresses is small relative to the size of the physical address space, conventional methods can therefore require storing a large amount of data describing mappings for the virtual addresses that must be searched for every memory access to perform memory access control.

The described systems utilize a forbidden mapping scheme to perform memory access control. With the forbidden mapping scheme, the described systems store mappings for virtual addresses for which memory access is not permitted. In cases where the number of forbidden mappings is smaller than the number of allowed mappings for the virtual addresses, the described systems can store and search through fewer mappings for the virtual addresses to perform memory access control compared to conventional methods. By using the forbidden mapping scheme, the described systems can therefore require significantly less stored data and less computational time to perform virtual memory management and memory access control.

The described systems can switch between using the forbidden mapping scheme and "allow-listed" mappings from virtual addresses to physical addresses. This allows the described systems to better adapt to changes in the size of the protected regions of the address space. The described systems can therefore perform virtual memory management and memory access control with a significantly reduced computational cost (e.g., in terms of memory usage, computational time, latency, power consumption, etc.) compared to conventional methods.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates memory management for a computing system using a forbidden mapping scheme.
FIG. 2A illustrates memory management for one or more virtual machines using a forbidden mapping scheme.
FIG. 2B illustrates memory management for software using a forbidden mapping scheme.
FIG. 2C illustrates memory management for hardware using a forbidden mapping scheme.
FIG. 3 illustrates an example memory management unit.
FIG. 4A illustrates an example forbidden mapping system that uses a forbidden mapping cache operating in a forbidden mapping mode.
FIG. 4B illustrates an example forbidden mapping system that uses a cached page table operating in a forbidden mapping mode.
FIG. 5 is a flowchart of an example process for translating a virtual address into a corresponding a physical address using a forbidden mapping scheme.
FIG. 6 is a flowchart of an example process of reading a forbidden mapping using the intermediate physical address using a forbidden mapping cache operating in a forbidden mapping mode.
FIG. 7 is a flowchart of an example process of reading a forbidden mapping using the intermediate physical address using a cached page table operating in a forbidden mapping mode.

Like reference numbers and designations in the various drawings indicate like elements.

### DETAILED DESCRIPTION

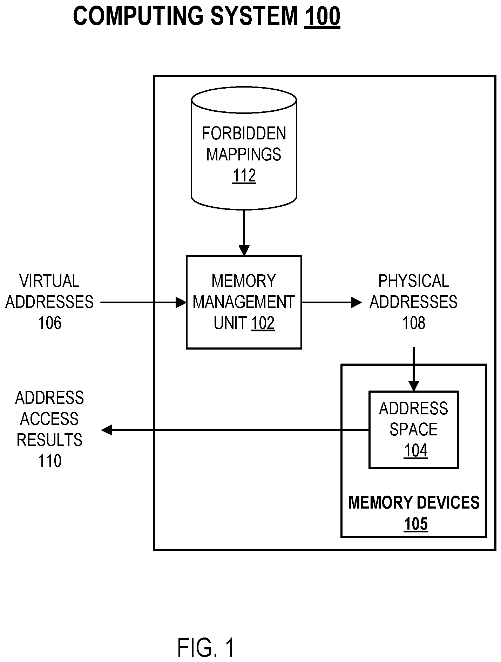

FIG. 1 illustrates memory management for a computing system 100 using a forbidden mapping scheme. The computing system 100 includes a memory management unit 102 configured to use the forbidden mapping scheme to perform memory access control for the computing system 100.

The computing system 100 can use the memory management unit 102 to manage an address space 104 (e.g., a global address space) for one or more memory devices 105 of the computing system 100 (e.g., including a system memory of the computing system 100, memory devices connected to the computing system 100, memory mapped devices connected to the computing system 100, and so on). In particular, the memory management unit 102 can perform virtual memory management of the address space 104 by translating virtual addresses 106 from a virtual address space into corresponding physical addresses 108 within the address space 104.

In this specification, an address space can refer to a space of addresses needed in order to make use of an underlying system resource. For example, an address space can define a range of memory addresses in one or more memory devices, addresses of input/output interfaces or devices, addresses of other system devices, or some combination of these.

A physical address space (e.g., the address space 104) is an address space that is needed to use the underlying physical system resource itself. For example, the address space 104 can include physical memory addresses, IO addresses, etc., of the computing system 100.

A virtual address space is an address space that software and/or hardware uses to reference a corresponding underlying system resource. Software (e.g., software running on the computing system 100, accessing the computing system 100, etc.) and/or hardware (e.g., components of the computing system 100, devices connected to the computing system 100, etc.) can indirectly access the address space 104 (e.g., read data from physical addresses in the address space 104, write data to physical addresses in the address space 104, etc.) using the virtual addresses 106. Each virtual address 106 can identify a corresponding physical address 108 in the address space 104.

The memory management unit 102 can store mappings for the virtual addresses 106 to corresponding physical addresses 108. The system 100 can use any appropriate mappings between the virtual addresses 106 and the physical addresses 108. As an example, the system 100 can map a contiguous range of virtual addresses 106 to a contiguous region of the address space 104. As another example, the system 100 can map a contiguous range of virtual addresses 106 to a non-contiguous region of the address space 104. As a further example, the system 100 can map any virtual address 106 to any physical address 108 in the address space 104.

When the memory management unit 102 receives the virtual addresses 106 (e.g., as part of software and/or hardware requesting to read or write data to the virtual addresses 106), the memory management unit 102 can determine whether memory access is permitted to the corresponding physical addresses 108 based on the stored mappings. In particular, the memory management unit 102 can be configured to operate in a forbidden mapping mode to perform memory access control using stored forbidden mappings 112 for virtual addresses 106 for which memory access is not permitted. When operating in the forbidden mapping mode to translate a given virtual address 106, the memory management unit 102 can deny memory access (e.g., by raising an access fault, returning an access error, etc.) and withhold from providing a translated physical address 110 if a mapping for the given virtual address 106 is stored within the forbidden mappings 112. If a mapping for the given virtual address 106 is not stored within the forbidden mappings 112, the memory management unit 102 can allow memory access by returning the corresponding physical address 108 for the given virtual address 106.

The forbidden mappings 112 can specify protected or reserved regions (e.g., a protected portion) of the address space 104 and the memory management unit 102 can use the forbidden mappings 112 to determine memory access permissions for software and/or hardware for the computing system 100. For example, the memory management unit 102 can use the forbidden mappings 112 to specify a protected region of the address space 104 for a given application or hardware device and can deny access by other applications or hardware devices to the protected region for the given application or hardware device. As another example, the memory management unit 102 can use the forbidden mappings 112 to specify a protected region of the address space 104 for groups of applications and/or hardware devices that have a particular permission level and can deny access to the protected region by applications or hardware devices that do not have the particular permission level. As another example, the memory management unit 102 can use the forbidden mappings 112 to specify a global protected region of the address space 104 and can deny access by all applications and/or hardware devices to the global protected region.

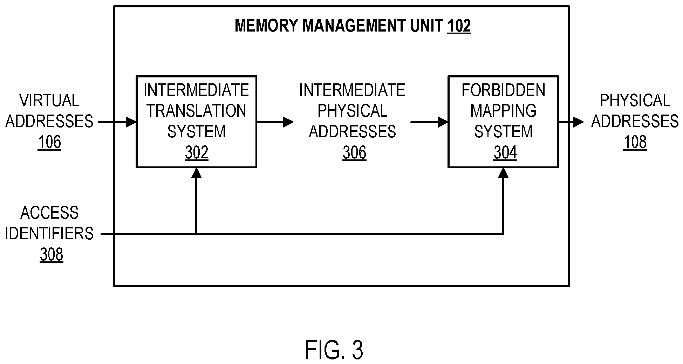

As described in more detail below with reference to FIG. 3, the memory management unit 102 can perform a two-stage translation of the virtual addresses 106 by first translating the virtual addresses 106 into corresponding intermediate physical addresses and by then translating the intermediate physical addresses into the corresponding physical addresses 108. The forbidden mappings 112 can be forbidden mappings between the intermediate physical addresses and corresponding physical addresses 108. When operating in the forbidden mapping mode, memory management unit 102 can perform memory access control while translating an intermediate physical address to a corresponding physical address 108 by denying memory access if the forbidden mappings 112 include a mapping for the intermediate physical address and by returning the corresponding physical address 108 (e.g., allowing memory access) if the forbidden mappings 112 do not include a mapping for the intermediate physical address.

By operating in the forbidden mapping mode, the memory management unit 102 can store and search through fewer mappings for the intermediate physical addresses to perform memory access control when the protected or reserved regions are smaller than the unprotected regions of the address space 104 (e.g., when the protected or reserved regions are smaller than half of the address space 104). When the protected or reserved regions are significantly smaller than the unprotected regions of the address space 104 (e.g., when the protected regions or reserved regions are smaller than 10% of the address space 104), the memory management unit 102 can therefore perform virtual memory management and memory access control for the computing system 100 using significantly less stored data and less computational time by using the forbidden mapping scheme as compared to using conventional allowed mappings. As a particular example, an implementation of the described memory management unit 102 can perform memory management for an 8 GB address space 104 with a 1 GB protected region using a 2 MB page table storing forbidden mappings of intermediate physical addresses while operating in the forbidden mapping mode, as compared to using a 14 MB page table storing allowed mappings of intermediate physical addresses. As another example, an implementation of the described memory management unit 102 can perform access control and memory management for a 100 MB protected region of the address space 104 utilizing a 200 KB page table storing forbidden mappings (which the memory management unit 102 can cache using, e.g., a forbidden mapping cache as described with respect to FIG. 3A).

After the memory management unit 102 performs memory access control for the virtual addresses 106, the computing system 100 can return appropriate address access results 112. For example, when the memory management unit 102 denies access for a given virtual address 106, the computing system 100 can return a memory access error. As another example, when the memory management unit 102 allows access for a given virtual address 106, the computing system 100 can access the corresponding physical address 108 and return an address access result 112 that includes, e.g., data read from the physical address 108, a confirmation of successfully writing data to the physical address 108, and so on.

The computing system 100 can be any of a variety of computing systems configured to utilize virtual addresses to indirectly address an address space. For example, the computing system 100 can be a component of a mobile device, a computer, a networked system of computers, and so on. For example, the computing system 100 can be a processor (e.g., a central processing unit (CPU), a graphics processing unit (GPU), a tensor processing unit (TPU), etc.), a chipset, a system-on-chip (SoC), and so on. As another example, the computing system 100 can be a component of a processor, a chipset, a system-on-chip (SoC), and so on.

In some implementations, the computing system 100 can perform memory management for an address space 104 shared by multiple processors (e.g., any combination of CPUs, GPUs, TPUs, etc.). For example, the computing system 100 can be one of multiple connected processors. As another example, the computing system 100 can be a system (e.g., a chipset, an SoC, etc.) that includes or is connected to multiple processors. The computing system 100 can use the forbidden mapping scheme to manage protected or reserved regions of the address space 104 for the multiple processors (e.g., regions of the address space 104 to which only particular associated processors are permitted memory access).

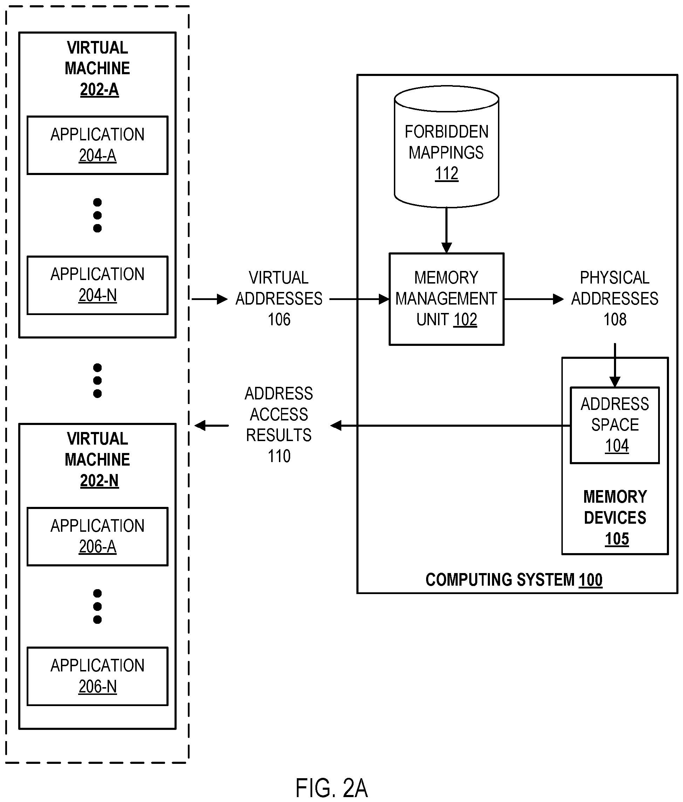

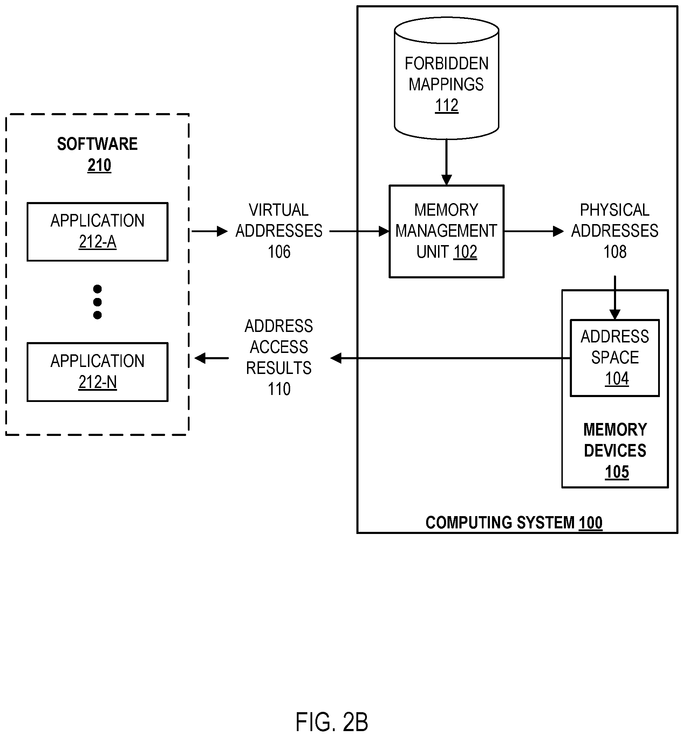

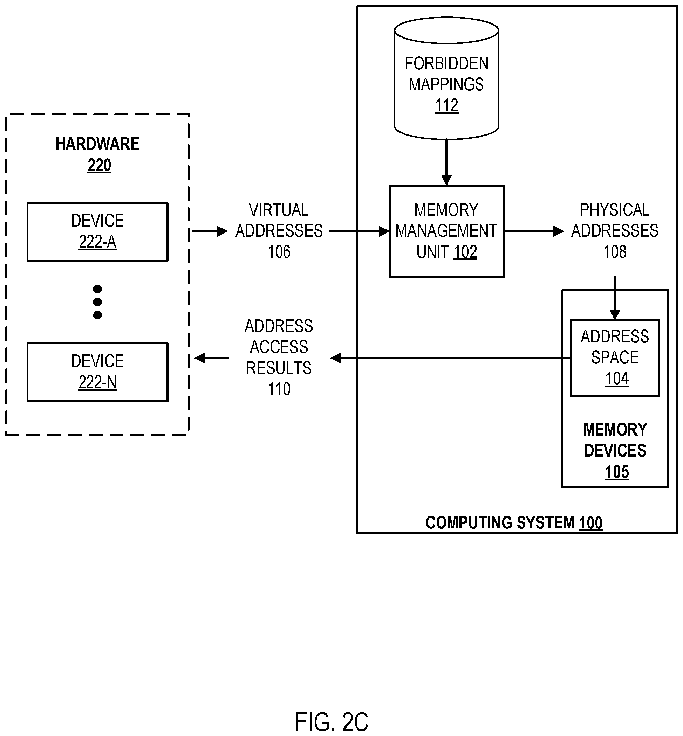

Implementations of the described systems can be used to perform memory management for any of a variety of applications, e.g., memory management for one or more virtual machines, memory management for one or more software applications, memory management for one or more hardware devices, and so on. Some example applications of the described systems are described in more detail below with reference to FIGs. 2A, 2B, and 2C.

FIG. 2A illustrates memory management for one or more virtual machines 202-A through 202-N using a forbidden mapping scheme. As illustrated in FIG. 2A, a computing system 100 configured as described throughout this specification (e.g., including a memory management unit 102 configured as described throughout this specification) can utilize the forbidden mapping scheme as part of running the one or more virtual machines 202-A through 202-N.

Each of the virtual machines 202-A through 202-N can run and manage respective software applications (e.g., programs). For example, as illustrated in FIG. 2A, the virtual machine 202-A can run applications 204-A through 204-N and the virtual machine 202-N can run applications 206-A through 206-N. Each of the virtual machines 202-A through 202-N can run the respective applications using a virtual address space. In particular, the virtual machines 202-A through 202-N can emulate respective computing systems (e.g., having respective processors, memory, I/O devices, etc.) and the virtual address space can emulate respective physical address spaces for each of the virtual machines 202-A through 202-N.

The computing system 100 can maintain mappings from the virtual addresses 106 within the virtual address space to corresponding physical addresses 108 within an address space 104 for one or more memory devices 105 of the computing system 100 (e.g., including a system memory of the computing system 100, memory devices connected to the computing system 100, memory mapped devices connected to the computing system 100, and so on). For example, the address space 104 can include physical memory addresses, IO addresses, etc., of the computing system 100.

Applications running on the virtual machines 202-A through 202-N can initiate access operations to virtual addresses 106 within the virtual address space by, e.g., writing data to the virtual addresses 106, reading data from the virtual addresses 106, and so on. The computing system 100 can complete the access operations to the virtual addresses 106 by determining whether access to the corresponding physical addresses 108 is permitted and returning appropriate address access results 112 to the virtual machines 202-A through 202-N. For example, when access for a given virtual address is permitted, the computing system 100 can access the corresponding physical address (e.g., by reading or writing data to the corresponding physical address) and return an appropriate access result. As another example, when access for a given virtual address is not permitted, the computing system 100 can return an access error or an access fault.

The applications running on the virtual machines 202-A through 202-N can include respective operating systems for the virtual machines (e.g., the applications 204-A through 204-N can include an operating system for the virtual machine 202-A and the applications 206-A through 206-N can include an operating system for the virtual machine 202-N). The operating systems for the virtual machines 202-A through 202-N can manage the execution of the respective applications run by the virtual machines 202-A through 202-N. The operating systems for the virtual machines 202-A through 202-N can perform any of a variety of tasks to manage the execution of the respective applications. For example, the operating systems for the virtual machines 202-A through 202-N can manage inputs to and outputs from the respective applications. As another example, the operating systems for the virtual machines 202-A through 202-N can request memory from the computing system 100 to be allocated, reserved, and/or protected for the respective applications. As another example, the operating systems for the virtual machines 202-A through 202-N can prioritize the execution of the respective applications and can manage load balancing for the respective applications. As another example, the operating systems for the virtual machines 202-A through 202-N can terminate unresponsive applications.

To maintain security and proper operation of the virtual machines 202-A through 202-N (e.g., including maintaining security and proper execution of applications running on the virtual machines 202-A through 202-N) and of the computing system 100 itself, the computing system 100 can reserve and protect certain physical addresses 108 within the address space 104.

The computing system 100 can maintain mappings (e.g., forbidden mappings 112) from virtual addresses to such reserved and protected physical addresses 110 within the address space 104. When an application running on one of the virtual machines 202-A through 202-N accesses a virtual address, the memory management unit 102 can operate in a forbidden mapping mode to determine whether access to the corresponding physical address is permitted based on whether a forbidden mapping for the virtual address is stored as one of the forbidden mappings 112 for protected regions of the address space 104.

The forbidden mappings 112 can include mappings for any of a variety of protected regions of the address space 104. For example, the forbidden mappings 112 can include mappings for a protected region of the address space 104 reserved a particular one of the virtual machines 202-A through 202-N, to which applications running on the particular virtual machine have permission to access while other applications (e.g., applications running on other virtual machines, running on the computer system 100, etc.) do not have permission to access. As another example, the forbidden mappings 112 can include mappings for a protected region of the address space 104 reserved for a particular application (e.g., an operating system) running on one of the virtual machines 202-A through 202-N, to which the particular application has permission to access while other applications (e.g., other applications running on the same virtual machine, applications running on other virtual machines, applications running on the computer system 100, etc.) do not have permission to access. As another example, the forbidden mappings 112 can include mappings for a protected region of the address space 104 reserved for the computing system 100, to which applications running on the virtual machines 202-A through 202-N do not have permission to access.

FIG. 2B illustrates memory management for software 210 using a forbidden mapping scheme. As illustrated in FIG. 2B, a computing system 100 configured as described throughout this specification (e.g., including a memory management unit 102 configured as described throughout this specification) can utilize the forbidden mapping scheme as part of running one or more software applications 212-A through 212-N.

The applications 212-A through 212-N running on the computer system 100 can include an operating system for the computer system 100. The operating system for the computer system 100 can manage the execution of the applications 212-A through 212-N. The operating system can perform any of a variety of tasks to manage the execution of the applications 212-A through 212-N. For example, the operating system can manage inputs to and outputs from the applications 212-A through 212-N. As another example, the operating system can request memory from the computing system 100 to be allocated, reserved, and/or protected for the applications 212-A through 212-N. As another example, the operating system can prioritize the execution of the respective applications and can manage load balancing for the applications 212-A through 212-N. As another example, the operating system can terminate unresponsive applications.

To maintain security and proper execution of the applications 212-A though 212-N, the applications 212-A though 212-N can indirectly access an address space 104 of one or more memory devices 105 of the computing system 100 (e.g., including physical memory addresses, IO addresses, etc., of the computing system 100) using virtual addresses 106 from a virtual address space. The computing system 100 can receive virtual addresses 106 referenced by the applications 212-A through 212-N, access the corresponding physical addresses 108 in the address space 104, and provide appropriate address access results 110 to the applications 212-A through 212-N.

The applications 212-A through 212-N can initiate access operations to virtual addresses 106 within the virtual address space by, e.g., writing data to the virtual addresses 106, reading data from the virtual addresses 106, and so on. The computing system 100 can complete the access operations to the virtual addresses 106 by determining whether access to the corresponding physical addresses 108 is permitted and returning appropriate address access results 112 to the applications 212-A through 212-N. For example, when access for a given virtual address is permitted, the computing system 100 can access the corresponding physical address (e.g., by reading or writing data to the corresponding physical address) and return an appropriate access result. As another example, when access for a given virtual address is not permitted, the computing system 100 can return an access error or an access fault.

The computing system 100 can reserve and protect certain physical addresses 108 within the address space 104 for the computing system 100. The computing system 100 can maintain mappings (e.g., forbidden mappings 112) from virtual addresses to such reserved and protected physical addresses within the address space 104. When one of the applications 212-A through 212-N accesses a virtual address, the memory management unit 102 can operate in a forbidden mapping mode to determine whether access to the corresponding physical address is permitted based on whether a forbidden mapping for the virtual address is stored as one of the forbidden mappings 112 for protected regions of the address space 104.

The forbidden mappings 112 can include mappings for any of a variety of protected regions of the address space 104. As an example, the forbidden mappings 112 can include mappings for a protected region of the address space 104 reserved for a particular application (e.g., an operating system of the computer system 100), to which the particular application has permission to access while other applications do not have permission to access. As another example, can include mappings for a protected region of the address space 104 reserved for applications with a particular permission level, to which particular applications running with the particular permission level have permission to access while applications not running with the particular permission level do not have permission to access.

FIG. 2C illustrates memory management for hardware 220 using a forbidden mapping scheme. As illustrated in FIG. 2C, a computing system 100 configured as described throughout this specification (e.g., including a memory management unit 102 configured as described throughout this specification) can utilize the forbidden mapping scheme as part of performing memory management for one or more hardware devices 222-A through 222-N.

The hardware devices 222-A through 222-N can include, e.g., any appropriate combination of processors (e.g., CPUs, GPUs, TPUs, etc.), I/O devices, memory devices, and so on.

The devices 222-A through 222-N and/or software applications (e.g., software applications running on the computing system 100, software applications running on the devices 222-A through 222-N) can indirectly access an address space 104 of one or more memory devices 105 of the computing system 100 (e.g., including physical memory addresses, IO addresses, etc., of the computing system 100) using virtual addresses 106 from a virtual address space. In some implementations, the address space 104 can include addresses for resources of one or more of the devices 222-A through 222-N (e.g., physical memory addresses, IO addresses, etc., of the devices 222-A through 222-N). The computing system 100 can receive the virtual addresses 106, access the corresponding physical addresses 108 in the address space 104, and return appropriate address access results 110.

The computing system 100 can reserve and protect certain physical addresses 108 within the address space 104. The computing system 100 can maintain mappings (e.g., forbidden mappings 112) from virtual addresses to such reserved and protected physical addresses within the address space 104. When one of the devices 222-A through 222-N or a software application accesses a virtual address, the memory management unit 102 can operate in a forbidden mapping mode to determine whether access to the corresponding physical address is permitted based on whether a forbidden mapping for the virtual address is stored as one of the forbidden mappings 112 for protected regions of the address space 104.

The forbidden mappings 112 can include mappings for any of a variety of protected regions of the address space 104. As an example, the forbidden mappings 112 can include mappings for a protected region of the address space 104 reserved for a particular one of the devices 222-A through 222-N (e.g., for use by applications running on the particular device), to which the particular device has permission to access while other devices do not have permission to access. As another example, the forbidden mappings 112 can include mappings for a protected region of the address space 104 reserved for applications (e.g., applications running on the computing system 100 or on one of the devices 222-A through 222-N) with a particular permission level, to which particular applications running with the particular permission level have permission to access while applications not running with the particular permission level do not have permission to access.

FIG. 3 illustrates an example memory management unit 102. The memory management unit 102 can receive virtual addresses 106 for accesses to virtual address spaces and can determine whether memory accesses to the corresponding physical addresses 108 are permitted. The memory management unit 102 can return translated physical addresses 108 for the permitted accesses to the virtual addresses 106.

The memory management unit 102 can perform a multi-stage translation from the virtual addresses 106 to the physical addresses 108 using an intermediate translation system 302 and a forbidden mapping system 304. The intermediate translation system 302 can translate the virtual addresses 106 to corresponding intermediate physical addresses 306. The forbidden mapping system 304 can determine, based on the intermediate physical addresses 306, whether memory accesses to the corresponding physical addresses 108 are permitted and, when the accesses are permitted, can return the translated physical addresses 108 for the intermediate physical addresses 306.

The memory management unit 102 can receive access identifiers 308 for each of the virtual addresses 106. For each virtual address 106, the access identifiers 308 can specify, e.g., an application, an operating system, a device, a permission level, and so on. The access identifiers 308 can include, e.g., process address space IDs (PASIDs), virtual machine IDs (VMIDS), stream IDs, substream IDs, device IDs, and so on.

The memory management unit 102 can perform the address translation and memory access control based on the received access identifiers 308. As an example, the memory management unit 102 can include separate page tables for the access identifiers 308. When the memory management unit 102 receives a virtual address 106 and an access identifier 308 for the virtual address 106, the memory management unit 102 can use the page tables indicated by the access identifier 308 when translating and performing memory access control for the virtual address 106.

The intermediate translation system 302 can translate the virtual addresses 106 into the intermediate physical addresses 306 by any appropriate method. For example, the intermediate translation system 302 can maintain a page table that stores mappings from virtual addresses 106 to intermediate physical addresses 306. For a given virtual address 106, the intermediate translation system 302 can perform a table look-up of the given address 106 in the page table and can return an intermediate physical address 306 for the given address 106 based on a mapping returned by the table look-up. As another example, the intermediate translation system 302 can maintain multiple page tables that store address mappings. For a given virtual address 106, the intermediate translation system 302 can perform a sequence of table look-ups in the page tables, with the results of each table look-up in the sequence being used for a next table look-up in the sequence, and can return an intermediate physical address 306 for the given address 106 based on a mapping returned by the last table look-up in the sequence.

The intermediate translation system 302 can include a translation lookaside buffer for each of the page tables of the system 302. The translation lookaside buffers can cache mappings for the table look-ups for the page tables of the system 302. When the intermediate translation system 302 includes a translation lookaside buffer for a particular page table, the system 302 can perform a table look-up for a given address in the particular page table by first searching for a mapping of given address in the translation lookaside buffer, returning a mapping for the given address if the given address results in a cache hit in the translation lookaside buffer, and searching the page-table for the given address if the given address results in a cache miss in the translation lookaside buffer.

The forbidden mapping system 306 can receive the intermediate physical addresses 306 and determine whether memory accesses to the corresponding physical addresses 108 are permitted. When the forbidden mapping system 304 determines that memory access to a physical address 108 is permitted, the forbidden mapping system can return the translated physical address 108 for the virtual address 106.

When the forbidden mapping system 304 determines that memory access to a physical address 108 is not permitted, the forbidden mapping system 304 can indicate a memory access error by any of a variety of methods. For example, the forbidden mapping system 304 can output a particular memory access error signal. As another example, the forbidden mapping system 304 can modify a register of the memory management unit that indicates the memory access error. As another example, the forbidden mapping system 304 can output a predetermined value as the physical address 108 for the intermediate physical addresses 306 that indicates the memory access error.

**In** general, the forbidden mapping system 304 stores mappings from intermediate physical addresses 306 to corresponding physical addresses 108. The forbidden mapping system 304 can operate in a forbidden mapping mode and an allowed mapping mode and can use the stored mappings from intermediate physical addresses 306 to corresponding physical addresses 108 to perform memory access control in different ways depending on whether the system 304 is operating in the forbidden or the allowed mapping mode. When operating in the forbidden mapping mode, the forbidden mapping system 304 generally stores mappings for intermediate physical addresses 306 for which memory access is not permitted and will prevent memory access for intermediate physical addresses 306 that are stored with forbidden mappings. When operating in the allowed mapping mode, the forbidden mapping system 304 generally stores mappings for intermediate physical addresses 306 for which memory access is permitted and will allow memory access for intermediate physical addresses 306 that are stored with allowed mappings.

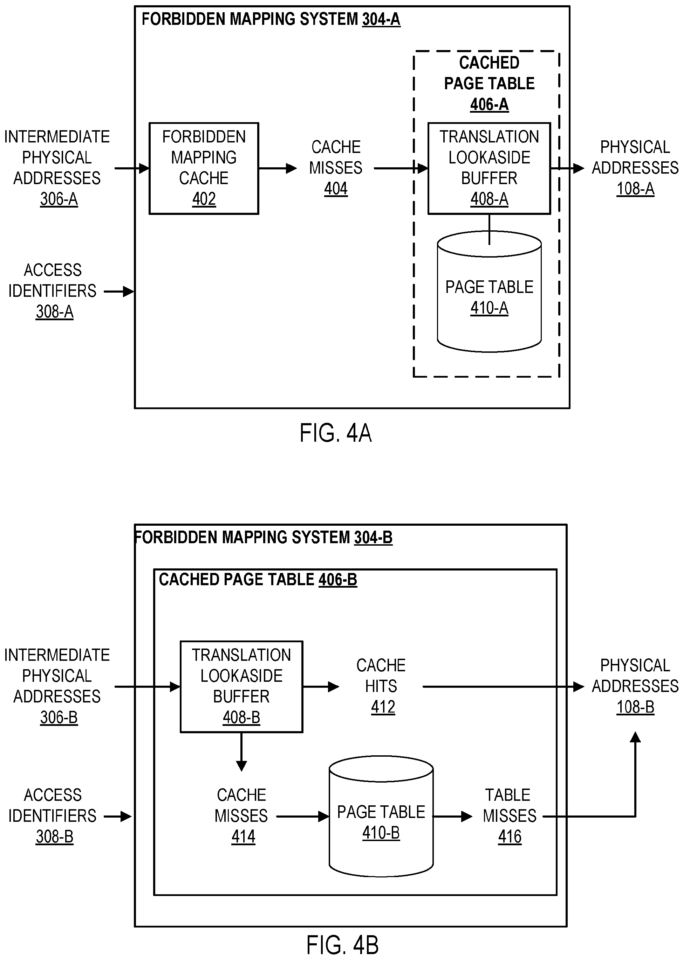

The forbidden mapping system 304 can translate the intermediate physical addresses 306 into corresponding physical addresses 108 by any appropriate method. For example, as described in more detail below with reference to FIG. 4A, the forbidden mapping system 304 can translate the intermediate physical addresses 306 using a forbidden mapping cache. As another example, as described in more detail below with reference to FIG. 4B, the forbidden mapping system 304 can translate the intermediate physical addresses 306 using a cached page table.

In some implementations, the forbidden mapping system 304 can determine whether to operate in the forbidden mapping mode or in the allowed mapping mode based on the intermediate physical addresses 306. For example, the forbidden mapping system 304 can determine whether to operate in the forbidden mapping mode or in the allowed mapping mode when processing a given intermediate physical address 306 based on a flagging bit the address 306. As another example, the forbidden mapping system 304 can determine whether to operate in the forbidden mapping mode or in the allowed mapping mode when processing a given intermediate physical address 306 based on whether the address 306 falls within a predetermined range of addresses.

The forbidden mapping system 304 can receive corresponding access identifiers 308 for each of the intermediate physical addresses 306. The forbidden mapping system 304 can perform the address translation and memory access control based on the received access identifiers 308 (e.g., by using page tables, buffers, caches, etc., as specified by the access identifiers 308).

In some implementations, the forbidden mapping system 304 can determine whether to operate in the forbidden mapping mode or in the allowed mapping mode based on the access identifiers 308. For example, some access identifiers 308 can specify using the forbidden mapping mode while other access identifiers 308 can specify using the allowed mapping mode, and the forbidden mapping system 304 can switch between using the forbidden mapping mode and the allowed mapping mode based on the received access identifiers 308.

In some implementations, the forbidden mapping system 304 can determine whether to operate in the forbidden mapping mode or in the allowed mapping mode based on a combination of the intermediate physical addresses 306 and the corresponding access identifiers 308. For example, a range of intermediate physical addresses 306 can be associated with a particular access identifier (e.g., as a reserved or protected region for applications, devices, permission levels, and so on indicated by the particular access identifier), and the system 304 can operate in the allowed mapping mode for the particular access identifier and in the forbidden mapping mode for other access identifiers when translating addresses within the range of intermediate physical addresses 306 associated with a particular access identifier.

In some implementations, the forbidden mapping system 304 can switch between operating in the forbidden and allowed mapping modes by loading different mappings for the intermediate physical addresses 306 to the physical addresses 108. For example, forbidden mapping system 304 can switch from the forbidden mapping mode to the allowed mapping mode by loading allowed mappings, e.g., into buffers, caches, page tables, etc., of the system 302. As another example, forbidden mapping system 304 can switch from the allowed mapping mode to the forbidden mapping mode by loading forbidden mappings, e.g., into buffers, caches, page tables, etc., of the system 304.

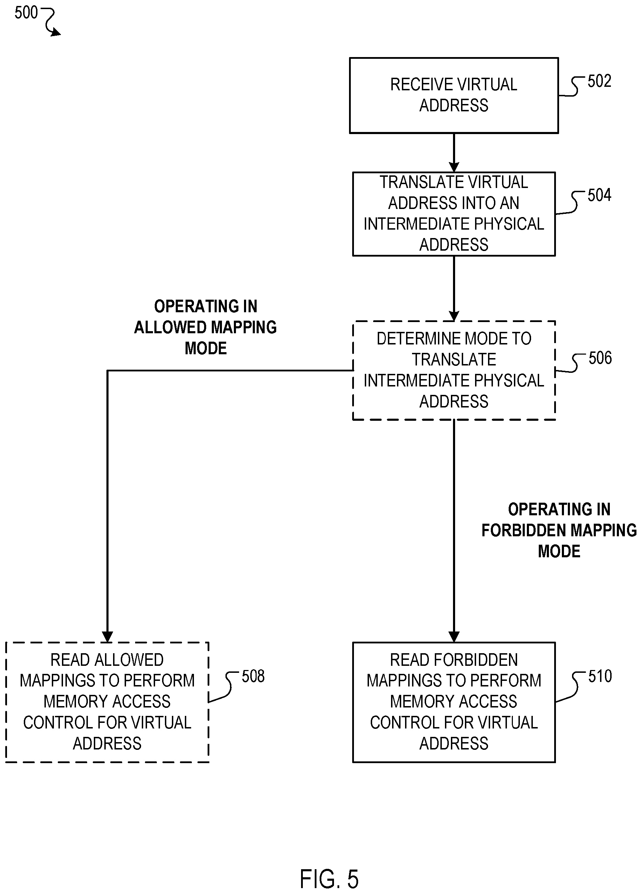

An example process by which the memory management unit 102 can translate the virtual addresses 106 to the physical addresses 108 is described in more detail below with reference to FIG. 5.

When the memory management unit 102 performs multi-stage translation from the virtual addresses 106 to the physical addresses 108, the memory management unit 102 can perform a different memory access control task at each stage of the multi-stage translation. As an example, the virtual addresses 106 can correspond to addresses referenced by applications running on one or more virtual machines (e.g., as managed by operating systems of the virtual machines), the intermediate physical addresses 306 can correspond to addresses referenced by applications running on the computing system 100 (e.g., as managed by an operating system of the computing system 100), and the physical addresses 108 can correspond to addresses of the address space 104 for resources of the computing system 100. The memory management unit 102 can perform memory access control for the virtual machines based on the translation of the virtual addresses 106 to the intermediate physical addresses 306 and can perform a global memory access control for the computing system 100 based on the translation of the intermediate physical addresses 306 to the physical addresses 110. For example, the intermediate translation system 302 can return an intermediate physical address 306 for a given virtual address 106 when access to the intermediate physical address 306 is permitted by the operating system of a virtual machine. As another example, the forbidden mapping system 304 can return a physical address 108 for a given virtual address 106 when access to the physical address 108 is permitted by the computing system 100.

FIG. 4A illustrates an example forbidden mapping system 304-A that uses a forbidden mapping cache 402 operating in a forbidden mapping mode. The forbidden mapping cache 402 can store mappings from intermediate physical addresses 306-A to physical addresses 108-B.

When operating in the forbidden mapping mode, the forbidden mapping system 304-A can receive intermediate physical addresses 306-A and can search the forbidden mapping cache 402 for the received addresses 306-A. If the system 304-A finds a given intermediate physical address 306-A within the forbidden mapping cache 402 (e.g., if the given address 306-A hits in the forbidden mapping cache 402), the system 304-A can prevent memory access for the given address 306-A and can, for example, return a memory access error. If a given intermediate physical address 306-A misses in the forbidden mapping cache 402, the system 304-A can allow memory access for the given address 306-A and can return a corresponding translated physical address 108-A.

In some implementations, the intermediate physical addresses 306-A can be the physical addresses 108-A and the system 304-A can return the cache misses 404 (e.g., the intermediate physical addresses 306-A that miss in the forbidden mapping cache 402) as the physical addresses 108-A.

In some implementations, the forbidden mapping system 304-A can include a cached page table 406-A. The cached page table 406-A can include a translation lookaside buffer 408-A and a page table 410-A that can store mappings from the intermediate physical addresses 306-A to the physical addresses 108-A.

When the forbidden mapping system 304-A operates in the allowed mapping mode, the system 304-A can translate the intermediate physical addresses 306-A using the cached page table 406-A. For example, if a given intermediate physical address 306-A hits in the translation lookaside buffer 408-A, the system 304-A can return the corresponding physical address 108-A stored in the translation lookaside buffer 408-A. If a given intermediate physical address 306-A misses in the translation lookaside buffer 408-A, the system 304-A can search for and return a corresponding physical address 108-A within the page table 410-A.

When the forbidden mapping system 304-A operates in the allowed mapping mode, the system 304-A can similarly translate the received intermediate physical addresses 306-A and perform memory access control using the cached page table 406-A.

In some implementations, the forbidden mapping cache 402 can be the translation lookaside buffer 408-A.

FIG. 4B illustrates an example forbidden mapping system 304-B that uses a cached page table 406-B operating in the forbidden mapping mode. The cached page table 406-B can include a translation lookaside buffer 408-B and a page table 410-B that can store mappings from the intermediate physical addresses 306-B to the physical addresses 108-B.

When operating in the forbidden mapping mode, the forbidden mapping system 304-B can receive intermediate physical addresses 306-B and can search the translation lookaside buffer 408-B for the received addresses 306-B. If the system 304-B finds a given intermediate physical address 306-B within the translation lookaside buffer 408-B (e.g., if the given address 306-B hits in the translation lookaside buffer 408-B), the system 304-B allow memory access for the given address 306-B and can return a corresponding translated physical address 108-B.

If a given intermediate physical address 306-B misses in the translation lookaside buffer 408-B, the system 304-B can search the page table 410-B for a mapping of the cache miss 414 (e.g., the given intermediate physical addresses 306-B that missed in the translation lookaside buffer 408-B). If the system 304-B finds the given intermediate physical address 306-B within the page table 410-B when operating in the forbidden mapping mode, the system 304-B can prevent memory access for the given address 306-B and can, for example, return a memory access error. If the system 304-B does not find the given intermediate physical address 306-B within the page table 410-B, the system 304-B can allow memory access for the given address 306-B and can return a corresponding translated physical address 108-B.

In some implementations, in the forbidden mapping mode, when the system 304-B searches for and does not find a mapping for a given intermediate physical addresses 306-B in the page table 410-B, the system 304-B can store a mapping for the given address 306-B to a corresponding physical address within the translation lookaside buffer 408-B.

In some implementations, the intermediate physical addresses 306-B can be the physical addresses 108-B and the system 304-B can return the cache hits 412 (e.g., the intermediate physical addresses 306-B that hit in the translation lookaside buffer 408-B) and the table misses 416 (e.g., the intermediate physical addresses 306-B for which a mapping is not stored in the page table 410-B) as the physical addresses 108-B.

FIG. 5 is a flowchart of an example process 500 for translating a virtual address into a corresponding a physical address using a forbidden mapping scheme. A memory management unit, e.g., the memory management unit 114 of FIG. 1, can perform the process 500.

The memory management unit can receive a virtual address (step 502). The memory management unit can receive the virtual address as part of a memory access operation to the virtual address by, e.g., a software application, a hardware device, and so on. The memory management unit can receive the virtual address from any of a variety of sources. For example, the memory management unit can perform memory management for a computing system (e.g., memory management for any combination of virtual machines running on the computing system, software applications running on the computing system, hardware devices connected to the computing system, etc.) and can receive the virtual address, e.g., from a virtual machine running on the computing system, from a software application running on the computing system, from a hardware device (e.g., a client device) connected to the computing system, and so on.

In some implementations, the memory management unit can receive one or more access identifiers for the received virtual address. The access identifiers for the virtual address can specify, e.g., an application, an operating system, a device, a permission level, and so on for the software application or hardware device accessing the received virtual address. The access identifiers can include, e.g., process address space IDs (PASIDs), virtual machine IDs (VMIDS), stream IDs, substream IDs, device IDs, and so on.

The memory management unit can translate the virtual address into an intermediate physical address (step 504). In particular, the memory management unit can store mappings between virtual addresses and corresponding intermediate physical addresses using one or more virtual address page tables and can translate the virtual address by reading the one or more virtual address page tables. In some implementations, the memory management unit can read the virtual address page tables by performing a sequence of table look-ups in the virtual address page tables, with the results of each table look-up in the sequence being used for a next table look-up in the sequence, and determining the intermediate physical address for the received virtual address based on a mapping returned by the last table look-up in the sequence. In some implementations, the memory management unit can cache the virtual address page tables using a translation lookaside buffer for the virtual address page tables.

In some implementations, the memory management unit can determine whether to operate in an allowed mapping mode or in the forbidden mapping mode to translate the intermediate physical address (step 506). The memory management unit can determine whether to operate in the allowed mapping mode or the forbidden mapping mode by any of a variety of methods. For example, in some implementations, the memory management unit can determine whether to operate in the forbidden mapping mode or in the allowed mapping mode based on the intermediate physical address (e.g., based on a flagging bit in the intermediate physical address, based on whether the intermediate physical address falls within a predetermined range of addresses, etc.). As another example, when the memory management unit receives access identifiers, the memory management unit can determine whether to operate in the forbidden mapping mode or in the allowed mapping mode based on the access identifiers (e.g., with some access identifiers specifying using the forbidden mapping mode and other access identifiers specifying using the allowed mapping mode). As another example, the memory management unit can determine whether to operate in the forbidden mapping mode or in the allowed mapping mode based on a combination of the intermediate physical address and the received access identifiers (e.g., determining to operate in the allowed mapping mode when intermediate address falls within a range of addresses associated with the received access identifiers and determining to operate in the forbidden mapping mode otherwise).

When the memory management unit operates in the allowed mapping mode, the memory management unit can read an allowed mapping between intermediate physical addresses and physical addresses to perform memory access control for the received virtual address (step 508). The memory management unit can store allowed mappings (e.g., mappings for intermediate physical addresses for which memory access is permitted when the memory management unit operates in the allowed mapping mode) between intermediate physical addresses and physical using one or more page tables for the intermediate physical addresses. In some implementations, the one or more page tables for the intermediate physical addresses can be cached using a translation lookaside buffer. When operating in the allowed mapping mode, the memory management unit can read the page tables for the intermediate physical addresses using the intermediate physical address and can allow memory access to the corresponding physical address when the page tables for the intermediate physical addresses store a mapping for the intermediate physical address by returning the corresponding physical address. The memory management unit can deny memory access to the corresponding physical address (e.g., when operating in the allowed mapping mode and when the page tables for the intermediate physical addresses do not include a mapping for the intermediate physical address) by withholding from returning a physical address for the intermediate physical address and, optionally, raising a memory access fault or error (e.g., by outputting a particular memory access error signal, by modifying a register of the memory management unit that indicates a memory access error, by outputting a predetermined value as the physical address that indicates the memory access error, and so on).

When the memory management unit operates in the forbidden mapping mode, the memory management unit can read a forbidden mapping between intermediate physical addresses and physical addresses to perform memory access control for the received virtual address (step 510). The memory management unit can read the forbidden mappings (e.g., mappings for intermediate physical addresses for which memory access is forbidden when the memory management unit operates in the forbidden mapping mode) using the intermediate address and can perform memory access control for the received virtual address based on a result of reading the forbidden mappings. If the forbidden mappings do not include a mapping for the intermediate address (e.g., if intermediate physical address misses in the forbidden mappings), the memory management unit can allow memory access for the received virtual address and return a physical address for the intermediate physical address. Otherwise, if the forbidden mappings include a mapping for the intermediate address (e.g., if intermediate physical address hits in the forbidden mappings), the memory management unit can deny memory access for the received virtual address by withholding from returning a physical address for the intermediate physical address and, optionally, raising a memory access fault or error (e.g., by outputting a particular memory access error signal, by modifying a register of the memory management unit that indicates a memory access error, by outputting a predetermined value as the physical address that indicates the memory access error, and so on).

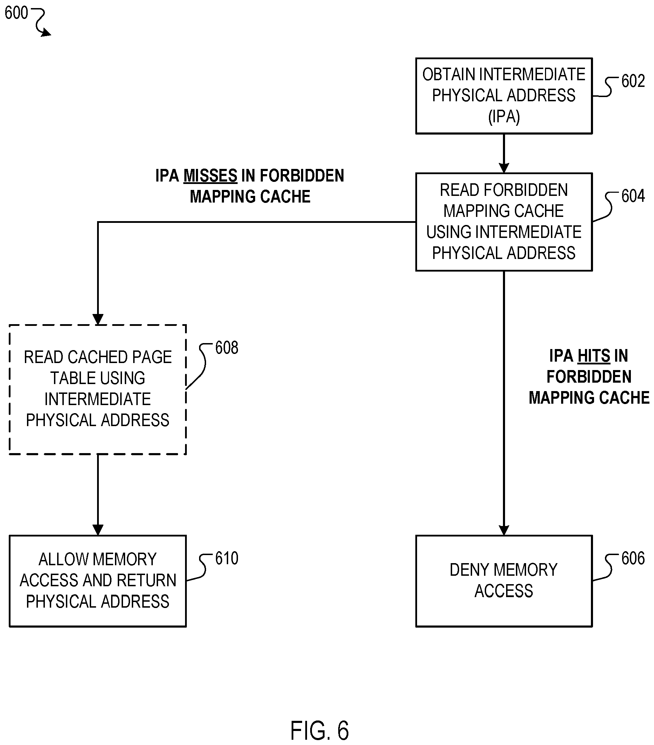

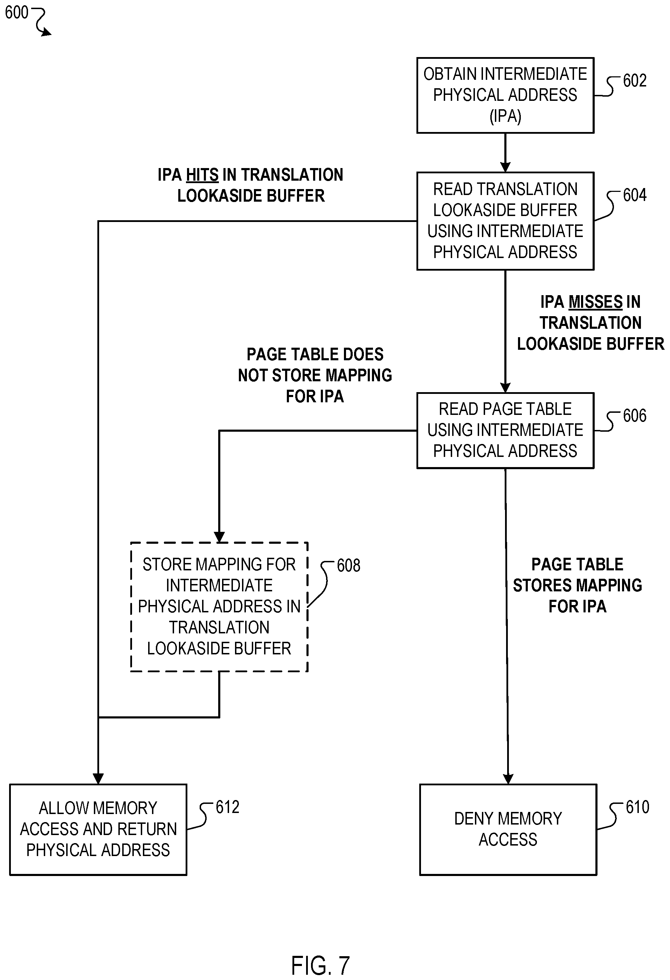

The memory management unit can be configured to maintain (e.g., store) the forbidden mappings between intermediate physical addresses and physical addresses by any appropriate means. For example, the memory management unit can store the forbidden mappings using a forbidden mapping cache that the memory management unit can read following the process 600 described in more detail below with reference to FIG. 6. As another example, the memory management unit can store the forbidden mappings using a cached page table that the memory management unit can read following the process 700 described in more detail below with reference to FIG. 7.

In general, when the memory management unit allows memory access and returns a physical address (e.g., when operating in either the allowed mapping mode or the forbidden mapping mode), the returned physical address can be used to perform a memory access operation to the physical address to, e.g., read data from the physical address, write data to the physical address, and so on. When the memory management unit performs memory management for a computing system, the computing system can perform the memory access operation to the physical address and can provide appropriate access results (e.g., data read from the physical address, data confirming a successful write operation to the physical address, etc.) to the software application or hardware device accessing the received virtual address. Similarly, when the memory management unit denies memory access, the computing system can provide an appropriate access result (e.g., data characterizing a memory access error) to the software application or hardware device accessing the received virtual address.

FIG. 6 is a flowchart of an example process of reading a forbidden mapping using the intermediate physical address using a forbidden mapping cache operating in a forbidden mapping mode. A memory management unit, e.g., the memory management unit 114 of FIG. 1, can perform the process 600.

The memory management unit can obtain an intermediate physical address (step 602). In particular, the memory management unit can obtain the intermediate physical address by translating a virtual address, e.g., following step 504 described above with reference to FIG. 5.

The memory management unit can read the forbidden mapping cache using the intermediate physical address (step 604). The forbidden mapping cache can store forbidden mappings between intermediate physical addresses and corresponding physical addresses.

The memory management unit can perform memory access control based on the result of reading the forbidden mapping cache using the intermediate physical address. If the intermediate physical address hits in the forbidden mapping cache (e.g., if the forbidden mapping cache stores a mapping for the intermediate physical address), memory access for the intermediate physical address is not allowed and the memory management unit can proceed to deny memory access (e.g., proceed to step 606). Otherwise, if the intermediate physical address misses in the forbidden mapping cache (e.g., if the forbidden mapping cache does not store a mapping for the intermediate physical address), memory access for the intermediate physical address is allowed and the memory management unit can proceed to return a physical address for the intermediate physical address (e.g., proceed to steps 608 and 610).

When the intermediate physical address hits in the forbidden mapping cache, the memory management unit can deny memory access (step 606). The memory management unit can deny memory access for the received virtual address by withholding from returning a physical address for the intermediate physical address and, optionally, raising a memory access fault or error (e.g., by outputting a particular memory access error signal, by modifying a register of the memory management unit that indicates a memory access error, by outputting a predetermined value as the physical address that indicates the memory access error, and so on).

In some implementations, when the intermediate physical address misses in the forbidden mapping cache, the memory management unit can determine the physical address for the intermediate physical address by reading a cached page table using the intermediate physical address (step 608). The cached page table can include a translation look aside buffer and a page table. The cached page table can store allowed mappings between intermediate physical addresses and physical addresses. When the memory management unit reads the cached page table, the memory management unit can determine the physical address for the intermediate physical address based on a mapping for the intermediate physical address stored in either the translation lookaside buffer or the page table (e.g., by first reading the translation lookaside buffer using the intermediate physical address and, if the intermediate physical address misses in the translation lookaside buffer, then reading the page table using the intermediate physical address).

When the intermediate physical address hits in the forbidden mapping cache, the memory management unit can allow memory access and return the physical address for the intermediate physical address (step 610). For example, when the memory management unit includes a cached page table storing allowed mappings from intermediate physical addresses to physical addresses, the memory management unit can return the physical address for the intermediate physical address as determined by reading the cached page table as described above with reference to step 608. As another example, in some implementations, the physical address for the intermediate physical address can be the intermediate physical address and the memory management unit can return the intermediate physical address as the physical address.

FIG. 7 is a flowchart of an example process of reading a forbidden mapping using the intermediate physical address using a cached page table operating in a forbidden mapping mode. A memory management unit, e.g., the memory management unit 114 of FIG. 1, can perform the process 600.

The memory management unit can obtain an intermediate physical address (step 702). In particular, the memory management unit can obtain the intermediate physical address by translating a virtual address, e.g., following step 504 described above with reference to FIG. 5.

The memory management unit can read the cached page table using the intermediate physical address. The cached page table can include a translation lookaside buffer and a page table. The translation lookaside buffer can store allowed mappings from intermediate physical addresses to physical addresses, while the page table can store forbidden mappings from intermediate physical addresses to physical addresses.

As part of reading the cached page table, the memory management unit can first read the translation lookaside buffer using the intermediate physical address (step 704). If a mapping for the intermediate physical address is stored within the translation lookaside buffer, memory access for the intermediate physical address is allowed and the memory management unit can proceed to return a physical address for the intermediate physical address (e.g., proceed to step 712).

If the translation lookaside buffer does not store a mapping for the intermediate physical address (e.g., if the intermediate physical address misses in the translation lookaside buffer), the memory management unit can read the page table using the intermediate physical address (step 706). If the page table includes a mapping for the intermediate physical address, memory access for the intermediate physical address is not allowed and the memory management unit can proceed to deny memory access (e.g., proceed to step 710).

If the page table does not include a mapping for the intermediate physical address, memory access for the intermediate physical address is allowed and the memory management unit can proceed to allow memory access (e.g., proceed to step 712).

In some implementations, when the intermediate physical address misses in the translation look aside buffer and when the page table does not store a mapping for the intermediate physical address, the memory management unit can store a mapping for the intermediate physical address in the translation lookaside buffer (step 708). For example, in some implementations, the physical address for the intermediate physical address can be the intermediate physical address and the memory management unit can store the intermediate physical address in the translation lookaside buffer.

When the intermediate physical address misses in the translation lookaside buffer and the page table stores a mapping for the intermediate physical address, the memory management unit can deny memory access (step 710). The memory management unit can deny memory access for the received virtual address by withholding from returning a physical address for the intermediate physical address and, optionally, raising a memory access fault or error (e.g., by outputting a particular memory access error signal, by modifying a register of the memory management unit that indicates a memory access error, by outputting a predetermined value as the physical address that indicates the memory access error, and so on).

When the intermediate physical address hits in the translation lookaside buffer or when the page table does not store a mapping for the intermediate physical address, the system can allow memory access and return a physical address for the intermediate physical address (step 712). For example, when the intermediate physical address hits in the translation lookaside buffer, the memory management unit can return the physical address for the intermediate physical address as determined by reading the translation lookaside buffer as described above with reference to step 704. As another example, in some implementations, the physical address for the intermediate physical address can be the intermediate physical address and the memory management unit can return the intermediate physical address as the physical address.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and pointing device, e.g, a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

In addition to the embodiments described above, the following embodiments are also innovative:
Embodiment 1 is a system comprising a memory management unit configured to perform a multi-stage address translation, wherein a first stage of the address translation performs address translation from virtual addresses to intermediate physical addresses, and wherein a second stage of the address translation performs address translation from intermediate physical addresses to physical addresses, wherein the memory management unit is configured to maintain a forbidden mapping between intermediate physical addresses and physical addresses, and wherein the memory management unit is configured to operate in a forbidden mapping mode to perform multi-stage address translation by performing operations comprising: translating a virtual address into an intermediate physical address, reading the forbidden mapping using the intermediate physical address, and returning a physical address for the intermediate physical address if the intermediate physical address misses in the forbidden mapping.
Embodiment 2 is the system of embodiment 1, wherein the system comprises multiple virtual machines that are configured to issue virtual addresses to the memory management unit.
Embodiment 3 is the system of embodiment 1, wherein the system comprises multiple client devices that are configured to issue virtual addresses to the memory management unit.
Embodiment 4 is the system of any one of embodiments 1-3, wherein the memory management unit comprises: a translation lookaside buffer and a memory storing a page table, wherein the translation lookaside buffer and the page table store intermediate physical address to physical address mappings.
Embodiment 5 is the system of embodiment 4, wherein: the memory management unit further comprises a forbidden mapping cache that stores intermediate physical address to physical address mappings; reading the forbidden mapping using the intermediate physical address comprises reading the reading the forbidden mapping cache using the intermediate physical address; and returning a physical address for the intermediate physical address if the intermediate physical address misses in the forbidden mapping comprises returning a physical address for the intermediate physical address if the intermediate physical address misses in the forbidden mapping cache.
Embodiment 6 is the system of embodiment 5, wherein returning a physical address for the intermediate physical address if the intermediate physical address misses in the forbidden mapping cache comprises: determining a physical address for the intermediate physical address based on a mapping for the intermediate physical address stored in either the translation lookaside buffer or the page table, and returning the physical address for the intermediate physical address if the intermediate physical address misses in the forbidden mapping cache.
Embodiment 7 is the system of embodiment 4, wherein: reading the forbidden mapping using the intermediate physical address comprises reading the reading the translation lookaside buffer using the intermediate physical address and reading the page table using the intermediate physical address if the intermediate physical address misses in the translation lookaside buffer; and returning a physical address for the intermediate physical address if the intermediate physical address misses in the forbidden mapping comprises returning a physical address for the intermediate physical address if intermediate physical address hits in the translation lookaside buffer or if the page table does not store the intermediate physical address.
Embodiment 8 is the system of embodiment 7, wherein returning a physical address for the intermediate physical address if the intermediate physical address misses in the forbidden mapping further comprises storing a mapping for the intermediate physical address in the translation lookaside buffer if the intermediate physical address misses in the translation lookaside buffer and if the page table does not store a mapping for the intermediate address.
Embodiment 9 is the system of any one of embodiments 4-8, wherein the memory management unit can operate in an allowed mapping mode to perform multi-stage address translation by: translating a virtual address into an intermediate physical address, reading the translation lookaside buffer using the intermediate physical address, and returning a physical address for the intermediate physical address if the intermediate physical address hits in the translation lookaside buffer or if the page table stores a mapping for the intermediate physical address.
Embodiment 10 is the system of embodiment 9, wherein the memory management unit can determine whether to operate in the forbidden mapping mode or the allowed mapping mode based on an access identifier.
Embodiment 11 is the system of embodiment 9 or embodiment 10, wherein: the memory management unit can switch from operating in the allowed mapping mode to operating in the forbidden mapping mode by loading forbidden address translations into the translation lookaside buffer and the page table, and the memory management unit can switch from operating in the forbidden mapping mode to operating in the allowed mapping mode by loading allowed address translations into the translation lookaside buffer and the page table.
Embodiment 12 is the system of any one of embodiments 1-11, wherein the intermediate physical address is the physical address.
Embodiment 13 is the system of any one of embodiments 1-12, wherein the forbidden mapping corresponds to a protected portion of a global address space.
Embodiment 14 is the system of embodiment 13, wherein the protected portion of the global address space has a fixed size.
Embodiment 15 is the system of embodiment 13 or embodiment 14, wherein the protected portion of the global address space has a size less than 10% of the size of the global address space.
Embodiment 16 is a method, comprising: translating, by a memory management unit configured to maintain a forbidden mapping between intermediate physical addresses and physical addresses, a virtual address into an intermediate physical address; reading, by the memory management unit, a forbidden mapping using the intermediate physical address; and returning, by the memory management unit, a physical address for the intermediate physical address if the intermediate physical address misses in the forbidden mapping.
Embodiment 17 is the method of embodiment 16, further comprising receiving, by the memory management unit, the virtual address from one of a plurality of virtual machines.
Embodiment 18 is the method of embodiment 16, further comprising receiving, by the memory management unit, the virtual address from one of a plurality of client devices.
Embodiment 19 is the method of any one of embodiments 16-18, wherein the memory management unit comprises a translation lookaside buffer and a memory storing a page table, wherein the translation lookaside buffer and the page table store intermediate physical address to physical address mappings.
Embodiment 20 is the method of embodiment 19, wherein the memory management unit further comprises a forbidden mapping cache that stores intermediate physical address to physical address mappings; reading, by the memory management unit, the forbidden mapping using the intermediate physical address comprises reading, by the memory management unit, the reading the forbidden mapping cache using the intermediate physical address; and returning, by the memory management unit, a physical address for the intermediate physical address if the intermediate physical address misses in the forbidden mapping comprises returning, by the memory management unit, a physical address for the intermediate physical address if the intermediate physical address misses in the forbidden mapping cache.
Embodiment 21 is the method of embodiment 20, wherein returning, by the memory management unit, a physical address for the intermediate physical address if the intermediate physical address misses in the forbidden mapping cache comprises: determining, by the memory management unit, a physical address for the intermediate physical address based on a mapping for the intermediate physical address stored in either the translation lookaside buffer or the page table, and returning, by the memory management unit, the physical address for the intermediate physical address if the intermediate physical address misses in the forbidden mapping cache.
Embodiment 22 is the method of embodiment 19, wherein: reading, by the memory management unit, the forbidden mapping using the intermediate physical address comprises: reading, by the memory management unit, the reading the translation lookaside buffer using the intermediate physical address and reading, by the memory management unit, the page table using the intermediate physical address if the intermediate physical address misses in the translation lookaside buffer; and returning, by the memory management unit, a physical address for the intermediate physical address if the intermediate physical address misses in the forbidden mapping comprises: returning, by the memory management unit, a physical address for the intermediate physical address if intermediate physical address hits in the translation lookaside buffer or if the page table does not store the intermediate physical address.
Embodiment 23 is the method of embodiment 22, wherein returning, by the memory management unit, a physical address for the intermediate physical address if the intermediate physical address misses in the forbidden mapping further comprises storing, by the memory management unit, a mapping for the intermediate physical address in the translation lookaside buffer if the intermediate physical address misses in the translation lookaside buffer and if the page table does not store a mapping for the intermediate address.
Embodiment 24 is the method of any one of embodiments 19-23, wherein the memory management unit can operate in an allowed mapping mode to perform multi-stage address translation by: translating a virtual address into an intermediate physical address, reading the translation lookaside buffer using the intermediate physical address, and returning a physical address for the intermediate physical address if the intermediate physical address hits in the translation lookaside buffer or if the page table stores a mapping for the intermediate physical address.
Embodiment 25 is the method of embodiment 24, wherein the memory management unit can determine whether to operate in the forbidden mapping mode or the allowed mapping mode based on an access identifier.
Embodiment 26 is the method of embodiment 24 or embodiment 25, wherein: the memory management unit can switch from operating in the allowed mapping mode to operating in the forbidden mapping mode by loading forbidden address translations into the translation lookaside buffer and the page table, and the memory management unit can switch from operating in the forbidden mapping mode to operating in the allowed mapping mode by loading allowed address translations into the translation lookaside buffer and the page table.
Embodiment 27 is the method of any one of embodiments 16-26, wherein the intermediate physical address is the physical address.
Embodiment 28 is the method of any one of embodiments 16-27, wherein the forbidden mapping corresponds to a protected portion of a global address space.
Embodiment 29 is the method of embodiment 28, wherein the protected portion of the global address space has a fixed size.
Embodiment 30 is the method of embodiment 28 or embodiment 29, wherein the protected portion of the global address space has a size less than 10% of the size of the global address space.
Embodiment 31 is a method performed by the system of any one of embodiments 1 to 15, comprising: translating, by the memory management unit configured to maintain a forbidden mapping between intermediate physical addresses and physical addresses, a virtual address into an intermediate physical address; reading, by the memory management unit, a forbidden mapping using the intermediate physical address; and returning, by the memory management unit, a physical address for the intermediate physical address if the intermediate physical address misses in the forbidden mapping.
Embodiment 32 is a computer storage medium encoded with instructions that are operable, when executed by data processing apparatus, to cause the data processing apparatus to perform operations comprising the method of any one of embodiments 16-31.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. **In** certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A system comprising:
a memory management unit configured to perform a multi-stage address translation,
wherein a first stage of the address translation performs address translation from virtual addresses to intermediate physical addresses, and wherein a second stage of the address translation performs address translation from intermediate physical addresses to physical addresses,
wherein the memory management unit is configured to maintain a forbidden mapping between intermediate physical addresses and physical addresses,
wherein the memory management unit is configured to operate in a forbidden mapping mode to perform multi-stage address translation by performing operations comprising:
translating a virtual address into an intermediate physical address,
reading the forbidden mapping using the intermediate physical address, and
returning a physical address for the intermediate physical address if the intermediate physical address misses in the forbidden mapping.

2. The system of claim 1, wherein:
the system comprises multiple virtual machines that are configured to issue virtual addresses to the memory management unit; or
the system comprises multiple client devices that are configured to issue virtual addresses to the memory management unit.

3. The system of any one of the claims 1 or 2, wherein the memory management unit comprises:
a translation lookaside buffer and a memory storing a page table,
wherein the translation lookaside buffer and the page table store intermediate physical address to physical address mappings.

4. The system of claim 3, wherein:
the memory management unit further comprises a forbidden mapping cache that stores intermediate physical address to physical address mappings;
reading the forbidden mapping using the intermediate physical address comprises:
reading the reading the forbidden mapping cache using the intermediate physical address; and
returning a physical address for the intermediate physical address if the intermediate physical address misses in the forbidden mapping comprises:
returning a physical address for the intermediate physical address if the intermediate physical address misses in the forbidden mapping cache.

5. The system of claim 4, wherein returning a physical address for the intermediate physical address if the intermediate physical address misses in the forbidden mapping cache comprises:
determining a physical address for the intermediate physical address based on a mapping for the intermediate physical address stored in either the translation lookaside buffer or the page table, and
returning the physical address for the intermediate physical address if the intermediate physical address misses in the forbidden mapping cache.

6. The system of claim 5, wherein:
reading the forbidden mapping using the intermediate physical address comprises:
reading the reading the translation lookaside buffer using the intermediate physical address; and
reading the page table using the intermediate physical address if the intermediate physical address misses in the translation lookaside buffer; and
returning a physical address for the intermediate physical address if the intermediate physical address misses in the forbidden mapping comprises:
returning a physical address for the intermediate physical address if intermediate physical address hits in the translation lookaside buffer or if the page table does not store the intermediate physical address.

7. The system of claim 6, wherein returning a physical address for the intermediate physical address if the intermediate physical address misses in the forbidden mapping further comprises:
storing a mapping for the intermediate physical address in the translation lookaside buffer if the intermediate physical address misses in the translation lookaside buffer and if the page table does not store a mapping for the intermediate address.

8. The system of any one of claims 3-7, wherein the memory management unit can operate in an allowed mapping mode to perform multi-stage address translation by:
translating a virtual address into an intermediate physical address,
reading the translation lookaside buffer using the intermediate physical address, and
returning a physical address for the intermediate physical address if the intermediate physical address hits in the translation lookaside buffer or if the page table stores a mapping for the intermediate physical address.

9. The system of claim 8 wherein the memory management unit can determine whether to operate in the forbidden mapping mode or the allowed mapping mode based on an access identifier.

10. The system of claim 8 or claim 9, wherein:
the memory management unit can switch from operating in the allowed mapping mode to operating in the forbidden mapping mode by loading forbidden address translations into the translation lookaside buffer and the page table, and
the memory management unit can switch from operating in the forbidden mapping mode to operating in the allowed mapping mode by loading allowed address translations into the translation lookaside buffer and the page table.

11. The system of any one of the preceding claims, wherein the intermediate physical address is the physical address.

12. The system of any one of the preceding claims, wherein the forbidden mapping corresponds to a protected portion of a global address space.

13. The system of claim 12, wherein:
the protected portion of the global address space has a fixed size;
and/or
the protected portion of the global address space has a size less than 10% of the size of the global address space.

14. A method performed by the system of any one of claims 1 to 13, comprising:
translating, by the memory management unit configured to maintain a forbidden mapping between intermediate physical addresses and physical addresses, a virtual address into an intermediate physical address;
reading, by the memory management unit, a forbidden mapping using the intermediate physical address; and
returning, by the memory management unit, a physical address for the intermediate physical address if the intermediate physical address misses in the forbidden mapping.

15. A computer storage medium encoded with instructions that are operable, when executed by data processing apparatus, to cause the data processing apparatus to perform operations comprising the method of claim 14.
